Europäisches Patentamt

**European Patent Office**

**Office européen des brevets**

(19)

(11) Veröffentlichungsnummer: **0 027 228**
**B1**

(12) # EUROPÄISCHE PATENTSCHRIFT

(45) Veröffentlichungstag der Patentschrift:
**18.04.84**

(51) Int. Cl.³: **C 01 B 33/28**

(21) Anmeldenummer: **80106037.7**

(22) Anmeldetag: **06.10.80**

(54) **Verfahren zur kontinuierlichen Herstellung feinstteiliger zeolithischer Natriumaluminiumsilikate.**

(30) Priorität: **13.10.79 DE 2941636**

(43) Veröffentlichungstag der Anmeldung:
**22.04.81 Patentblatt 81/16**

(45) Bekanntmachung des Hinweises auf die Patenterteilung:
**18.04.84 Patentblatt 84/16**

(84) Benannte Vertragsstaaten:
**AT BE CH DE FR GB IT LI NL SE**

(56) Entgegenhaltungen:
**DD - A - 132 069**
**DE - A - 2 832 947**
**DE - B - 1 038 017**
**DE - B - 2 447 021**

**ULLMANNS ENCYCLOPÄDIE DER TECHNISCHEN CHEMIE 4. Auflage, Band 3, 1973, VERLAG CHEMIE, Weinheim Seiten 342 bis 354**

(73) Patentinhaber: **Henkel Kommanditgesellschaft auf Aktien, Postfach 1100 Henkelstrasse 67, D-4000 Düsseldorf-Holthausen (DE)**
Patentinhaber: **Degussa Aktiengesellschaft, Weissfrauenstrasse 9, D-6000 Frankfurt am Main 1 (DE)**

(72) Erfinder: **Christophliemk, Peter, Dr., Rudolf-Breltscheid-Strasse 61, D-4000 Düsseldorf 13 (DE)**
Erfinder: **Wüst, Willi, Dr., Fasanenring 32, D-4030 Ratingen-Hösel (DE)**
Erfinder: **Carduck, Franz-Josef, Dr., Landstrasse 18, D-5657 Haan/Rhld (DE)**

Verfahren zur kontinuierlichen Herstellung feinstteiliger zeolithischer Natriumaluminiumsilikate

Gegenstand der Erfindung ist ein Verfahren zur kontinuierlichen Herstellung einer wässrigen alkalischen Suspension feinstteiliger, gritarmer, kristalliner zeolithischer Natriumaluminiumsilikate durch Kristallisation einer wässrigen alkalischen Suspension röntgenamorpher Natriumaluminiumsilikate.

Röntgenamorphe Natriumaluminiumsilikate werden in der Regel durch Umsetzung einer wässrigen Natriumaluminatlösung mit einer wässrigen Natriumsilikatlösung in Gegenwart überschüssiger Natronlauge bei Temperaturen oberhalb Raumtemperatur hergestellt. Hierbei entsprechen die in der Technik gebräuchlichen Ansatz- und Konzentrationsbereiche der Reaktionspartner im allgemeinen Molverhältnissen von:

1,5 bis 5 $Na_2O$ : 1 $Al_2O_3$ : 1 bis 4 $SiO_2$ : 40 bis 400 $H_2O$.

Bei derartigen Ansatzverhältnissen bildet sich stets eine Suspension eines röntgenamorphen, wasserhaltigen Natriumaluminiumsilikats mit einem hohen Überschuss an Natronlauge, wobei der amorphe wasserhaltige Feststoff eine chemische Zusammensetzung entsprechend Molverhältnissen von

1 bis 5 $Na_2O$ : 1 $Al_2O_3$ : 1,8 bis 4 $SiO_2$

aufweist. Nach Abtrennen der Mutterlauge und Auswaschen des überschüssigen Alkalis lassen sich hieraus röntgenamorphe Produkte einer chemischen Zusammensetzung entsprechend Molverhältnissen von

0,9 bis 1,1 $Na_2O$ : 1 $Al_2O_3$ : 1,8 bis 4 $SiO_2$

mit einem vom Trocknungsgrad abhängigen Wassergehalt isolieren. Der Silikatgehalt des amorphen Produktes wird weitgehend vom Molverhältnis $SiO_2$ : $Al_2O_3$ im Reaktionsansatz bestimmt.

Für die meisten technischen Anwendungen werden jedoch nicht derartige amorphe Natriumaluminiumsilikate verwendet, sondern deren kristalline, vorzugsweise zeolithische Folgeprodukte. Die sogenannten Zeolithe bilden eine Mineralklasse kristallwasserhaltiger Alkalialuminiumsilikate mit definierter Poren- und Hohlraumstruktur ihres Aluminiumsilikat-Gitters. «Molekularsiebe» sind dabei solche Zeolithe, die aufgrund dieser Gittereigenschaften insbesondere für Stofftrennungen eingesetzt werden. Synthetische Zeolithe sind von zunehmender technischer Bedeutung und werden als Kationenaustauscher vor allem zum Enthärten von Wasser, als Katalysatoren bei chemischen Prozessen, als Trocken-, Trenn- bzw. Sorptionsmittel für Lösungsmittel und Gase und als heterogene anorganische Builder in Wasch- und Reinigungsmitteln eingesetzt. Je nach Anwendungszweck sind unterschiedliche Typen, Trocken- und Reinheitsgrade erforderlich. Üblicherweise werden solche Molekularsiebe zunächst in ihrer Natriumform hergestellt und anschliessend durch Kationenaustausch in andere Formen umgewandelt. Molekularsieb NaA ist für die meisten der genannten Anwendungszwecke von besonderer Bedeutung. Die chemische Zusammensetzung dieses Typs entspricht der Summenformel:

0,9 bis 1,1 $Na_2O$ : 1 $Al_2O_3$ : 1,8 bis 2,5 $SiO_2$ : 0 bis 6 $H_2O$.

Das charakteristische Röntgenbeugungsdiagramm dieses Zeoliths ist beispielsweise in der deutschen Auslegeschrift DE-AS-1 038 017 beschrieben.

Für die meisten technischen Anwendungszwecke wird ein feinteiliges Natriumaluminiumsilikat mit einer möglichst engbandigen Korngrössenverteilung und einer mittleren Korngrösse unter 10 $\mu m$ bevorzugt. Für den Einsatz in Wasch- und Reinigungsmitteln soll darüber hinaus der Anteil an Teilchen oberhalb 25 $\mu m$ nicht mehr als 0,2 Gewichtsprozent betragen und das Kationenaustauschvermögen möglichst hoch sein. Der Teilchen-Anteil grösser 25 $\mu m$ wird durch Nasssiebung nach MOCKER (DIN 53 580) ermittelt und im folgenden als «Grit» bezeichnet. Als Mass für das Kationenaustauschvermögen wird das Calciumbindevermögen von 1 g kristallinem Natriumaluminiumsilikat (Aktivsubstanz) pro Liter und 30°d (Deutsche Härte) Ausgangshärte nach einer Einwirkungsdauer bei Raumtemperatur von 10 Minuten herangezogen.

Die Umwandlung von amorphem Natriumaluminiumsilikat in zeolitische Formen ist ein von vielen Parametern abhängiger Kristallisationsvorgang, der mit zunehmender Temperatur schneller abläuft. Technisch bevorzugt ist die Kristallisation unter Normaldruck zur Herstellung von Molekularsieb NaA insbesondere bei Temperaturen oberhalb 70°C. Stark erhöhte Temperaturen — zum Beispiel weit oberhalb 100°C (in Autoklaven) — fördern zumeist die Bildung anderer kristalliner Natriumaluminiumsilikate mit stark verringertem Kationenaustauschvermögen. Je nach Molverhältnissen im Ansatz und der Temperaturführung erfordert diese Kristallisation Zeiten von wenigen Minuten bis zu mehreren Tagen. Zur Herstellung von hochkristallinem Produkt des Typs NaA in hoher Raum/Zeit-Ausbeute — bei besonders bevorzugten Molverhältnissen im Ansatz im Bereich von

1,5 bis 5 $Na_2O$ : 1 $Al_2O_3$ : 1 bis 2,5 $SiO_2$ : 60 bis 140 $H_2O$

und Kristallisationstemperaturen im Bereich von 70 bis 100°C — beträgt die erforderliche Kristallisationsdauer in der Regel 15 bis 60 Minuten. Zur Erzielung besonders gritarmer Produkte ist gegebenenfalls eine verlängerte Kristallisationszeit erforderlich.

Amorphes Natriumaluminiumsilikat lässt sich technisch sowohl diskontinuierlich als auch kontinuierlich herstellen. Die Umwandlung dieses amorphen Natriumaluminiumsilikats in feinteilige zeolithische Produkte mit einem Gritgehalt kleiner als 0,2 Gewichtsprozent konnte in technischem Massstab bislang jedoch nur diskontinuierlich erfolgen.

In der DD-A-132 069 wird ein kontinuierliches Verfahren zur Herstellung von kristallinen, teilweise kristallinen oder amorphen Alumosilikaten — auch mit Zeolitheigenschaften — beschrieben, bei dem ein Mehrkammer-Durchflussreaktor, bestehend aus zwei bis zwanzig, vorzugsweise fünf bis zehn, miteinander verbundenen Kammern Verwendung findet. Dieser Mehrkammer-Durchflussreaktor ist durch eine innere und/oder äussere zwangsweise partielle Rückführung der Reaktionslösung in vorher durchflossene Kammern gekennzeichnet. In diesen Reaktor werden die Ausgangsprodukte für die Alumosilikate in wässriger Phase eingeführt und reagieren zu kristallinen, teilweise kristallinen oder amorphen Alumosilikaten.

Nach diesem Verfahren kann unter anderem auch Zeolith A hergestellt werden. Jedoch finden sich in dieser Patentschrift keinerlei Angaben über die Teilchengrösse oder den Gritgehalt des so hergestellten Zeoliths. Gegen die Bildung feinstteiliger Zeolithe mit einem geringen Gritgehalt bei diesem Verfahren spricht die Tatsache, dass in den unteren Kammern des Reaktors Schereinrichtungen zur Zerkleinerung des Produktes und zur Schaffung von Kristallisationskeimen vorgesehen werden können, von wo aus die partielle, zwangsweise äussere Rückführung des Produktstromes in eine der oberen Kammern erfolgt. Das Verfahren führt auch nicht in jedem Falle zu kristallinen Produkten; kristalline Produkte resultieren nur dann, wenn die Verweilzeit des Reaktionsgemisches 1 - 5 Stunden, vorzugsweise 1,5 - 4 Stunden, bei einer Temperatur von 80°C beträgt. Somit handelt es sich bei dem hier beschriebenen Verfahren in erster Linie um ein kontinuierliches Fällungsverfahren, das nur bedingt zu kristallinen Zeolithen undefinierter Grösse führt.

Demgegenüber ist es die Aufgabe der vorliegenden Erfindung, ein Verfahren zur Umwandlung röntgenamorpher Natriumaluminiumsilikate in feinstteilige, kristalline zeolithische Natriumaluminiumsilikate zu entwickeln, das einerseits einen kontinuierlichen Verfahrensablauf mit einer hohen Raum/Zeit-Ausbeute und andererseits zu möglichst gritarmen Produkten mit einem hohen Kationenaustauschvermögen führt.

Gegenstand der Erfindung ist demnach ein Verfahren zur kontinuierlichen Herstellung einer wässrigen alkalischen Suspension feinstteiliger, gritarmer, kristalliner zeolithischer Natriumaluminiumsilikate der Zusammensetzung
0,9 bis 1,1 $Na_2O$ : 1 $Al_2O_3$ : 1,8 bis 2,5 $SiO_2$
mit einem vom Trocknungsgehalt abhängigen Wassergehalt, die zu mindestens 99,8 Gewichtsprozent eine Teilchengrösse von kleiner als 25 $\mu m$ und ein hohes Kationenaustauschvermögen aufweisen, durch Kristallisation einer wässrigen alkalischen Suspension röntgenamorpher Natriumaluminiumsilikate, die eine Zusammensetzung entsprechend Molverhältnissen von
1,5 bis 5 $Na_2O$ : 1 $Al_2O_3$ : 1 bis 4 $SiO_2$ : 40 bis 400 $H_2O$
aufweist, bei erhöhten Temperaturen, welches dadurch gekennzeichnet ist, dass man die Suspension des röntgenamorphen Natriumaluminiumsilikats kontinuierlich in einen stufig wirkenden und/oder stufig ausgeführten Kristallisationsreaktor mit mindestens 20 Stufen einströmen lässt, wobei die Suspension im Eingangsteil des Reaktors, der bis zu einem Drittel des gesamten Reaktorvolumens umfassen kann, mindestens 8 Stufen durchströmt und eine Rückvermischung von bereits kristallisiertem Produkt mit amorphem Produkt — insbesondere im ersten Drittel der Kristallisationsstrecke — weitgehend zurückgedrängt wird, die Suspension bei einer Temperatur von 80 bis 100°C so lange im Reaktor hält, bis der röntgenographisch ermittelte Kristallisationsgrad des zeolitischen Natriumaluminiumsilikats mindestens 80% der theoretisch erzielbaren Kristallinität erreicht hat, und anschliessend die Suspension kontinuierlich am dem Eingangsteil entgegengesetzten Ende des Reaktors ausströmen lässt.

Im Sinne des erfindungsgemässen Verfahrens ist es mithin von wesentlicher Bedeutung, dass die zu kristallisierende Suspension kontinuierlich einen Kristallisationsreaktor durchströmt, der insgesamt eine hohe Stufenzahl und in seinem Eingangsteil, der bis zu einem Drittel des gesamten Reaktorvolumens umfassen kann, mindestens 8 Stufen aufweist. Hierbei ist es ohne Belang, ob der Kristallisationsreaktor stufig ausgeführt ist — das heisst diskrete Stufen aufweist — und/oder nur stufig wirkt, da die Stufenzahl des Reaktors im Prinzip mit der einer in bezug auf die Verweilzeitverteilung äquivalenten Rührkesselkaskade gleichzusetzen ist. Im Hinblick auf die Abhängigkeit des Verweilzeitverhaltens vom sogenannten Stufenwirkungsgrad des verwendeten Reaktors sowie auf Zusammenhänge zwischen praktischer und theoretischer Stufenzahl mehrstufiger Reaktoren wird auf entsprechende Lehrbücher der technischen Chemie verwiesen, beispielsweise «Ullmanns Enzyklopädie der technischen Chemie», 4. Auflage, Band 3; «Verfahrenstechnik II und Reaktionsapparate», 1973, Verlag Chemie, Seiten 342 bis 354.

Generell lässt sich die Stufenzahl eines kontinuierlich zu betreibenden Reaktors als ein Mass dafür ansehen, in welchem Umfange Produktanteile bezüglich der Produkthauptfront vorauseilen bzw. zurückströmen, mithin also als ein Mass für die Vermischung in Strömungsrichtung. Je höher die Stufenzahl des Reaktors, um so geringer ist das Ausmass der Vermischung zwischen den einzelnen Volumenelementen der zu kristallisierenden Suspension in Strömungsrichtung. Bei dem erfindungsgemässen Verfahren kristallisiert die Suspension in Strömungsrichtung; im Eingangsteil des Reaktors wird die Suspension des amorphen Natriumaluminiumsilikats kontinuierlich eingespeist, am Ausgangsteil strömt die Suspension des kristallisierten Natriumaluminiumsilikats kontinuierlich aus. Eine verringerte Vermischung der Volumenelemente in Strömungsrichtung bedingt mithin eine verringerte Wechselwirkung von Natriumaluminiumsilikat-Teilchen unterschiedlicher Kristallinität.

Überraschenderweise wurde nun festgestellt, dass es im Sinne des erfindungsgemässen Verfahrens von wesentlicher Bedeutung ist, die Rückvermischung von bereits kristallisiertem Produkt mit amorphem Produkt — insbesondere im ersten Drittel der Kristallisationsstrecke — weitgehend zurückzudrängen, bzw. die Wechselwirkung von Natriumaluminiumsilikat-Teilchen höherer Kristallinität mit solchen geringerer Kristallität möglichst zu unterbinden.

Auf diese Weise resultieren bei dem erfindungsgemässen Verfahren feinstteilige, kristalline zeolithische Natriumaluminiumsilikate, die einerseits einen sehr niederen Grit-Anteil und ein engbandiges Kornspektrum mit einer nur geringen mittleren Korngrösse aufweisen sowie sich andererseits durch ein hohes Kationenaustauschvermögen auszeichnen. Von besonderem Vorteil ist ferner die bei dieser kontinuierlichen Verfahrensführung erzielbare hohe Raum/Zeit-Ausbeute. In diesem Sinne ist es erfindungsgemäss bevorzugt, dass man die Suspension mit einem Durchsatz im Bereich von 1 bis 4 Kubikmeter Suspension pro Kubikmeter Reaktorvolumen und Stunde in den Reaktor einströmen lässt.

Als Kristallisationsreaktoren im Sinne der Erfindung können generell solche Reaktoren Verwendung finden, die ein kontinuierliches Einführen der amorphen Suspension sowie ein kontinuierliches Ableiten der Kristallisat-Suspension ermöglichen und die erforderliche Stufenverteilung aufweisen. Derartige Reaktoren sind an sich bekannt und in Lehrbüchern der technischen Chemie beschrieben, beispielsweise in dem vorstehend zitierten «Ullmann»-Band.

In der Regel liegt die Fällungstemperatur der amorphen Suspension unterhalb der erforderlichen Kristallisationstemperatur, so dass die Suspension zur Kristallisation aufgeheizt werden muss. Dieses Aufheizen kann sowohl indirekt als auch durch Einblasen von Wasserdampf in die Suspension erfolgen. Erfindungsgemäss ist es bevorzugt, dass man die Suspension entweder vor Einleiten in den Kristallisationsreaktor oder in der Eingangsstufe des Reaktors durch Einblasen von Wasserdampf auf die gewünschte Kristallisationstemperatur erhitzt. Für eine gegebenenfalls erforderliche Absenkung der Fällungstemperatur auf die gewünschte Kristallisationstemperatur können dem Kristallisationsreaktor vorgeschaltete Wärmeaustauscher Verwendung finden.

Der jeweils verwendete Kristallisationsreaktor als auch die Zuführung für die amorphe Suspension können ganz oder teilweise mit einem Heizmantel für Wasserdampf, Heisswasser oder andere gebräuchliche Wärmeübertragungsmedien umgeben sein. Auf diese Weise lässt sich die kontinuierliche Kristallisation weitgehend isotherm, das heisst mit einer Toleranz von ± 2°C durchführen. Im Sinne des erfindungsgemässen Verfahrens ist es bevorzugt, dass man die Suspension bei einer bis auf Abweichungen von ± 2°C konstanten Temperatur, vorzugsweise im Bereich von 85 bis 95°C, kristallisiert.

Das Gesamtvolumen des zu verwendenden Kristallisationsreaktors und damit auch seine Abmessungen werden vom angestrebten Mengendurchsatz der zu kristallisierenden Suspension bestimmt.

Zur Durchführung des erfindungsgemässen Verfahrens werden als Kristallisationsreaktoren bevorzugt Rohrreaktoren und/oder Rührkolonnen verwendet.

Beim Rohrreaktor (oder auch «Strömungsrohr») wird das Reaktionsvolumen von einem Rohr gebildet, dessen Länge in der Regel sehr gross ist im Vergleich zu seinem Durchmesser. Die Reaktanden treten an dem einen Ende des Rohres ein, das Endgemisch wird am anderen Ende ausgetragen. Für das ideale Strömungsrohr gilt, dass keine Vermischung zwischen den einzelnen Volumenelementen der Reaktionsmischung in Strömungsrichtung stattfindet und dass die Zusammensetzung der Reaktionsmischung an jeder Stelle des Rohres über den Querschnitt konstant ist. Man kann diese Bedingungen in erster Näherung durch die Annahme einer sogenannten Kolben- oder Propfenströmung beschreiben. Die Änderungen der Konzentrationen längs des Rohres sind abhängig von dem Durchsatz.

Die Verweilzeitverteilung eines realen Strömungsrohres unterscheidet sich von derjenigen eines idealen und ist abhängig von REYNOLDS-Zahl, Rohrkrümmungen, Rohrprofil, Rohreinbauten, Wandrauhigkeiten, Strömungsverhältnissen am Eingang und Ausgang des Rohres, Zähigkeitsunterschieden des Reaktionsgemisches und ähnlichen Parametern. Kenntnisse über die Verweilzeitverteilung in einem gegebenen Rohrreaktor kann man sich entweder durch Messung verschaffen oder indem man die Betriebsbedingungen so wählt, dass sie weitgehend ideal sind.

Angaben zum Aufbau und Betreiben von Rohrreaktoren einschliesslich deren mathematischer Behandlung lassen sich Lehrbüchern der technischen Chemie entnehmen, beispielsweise dem vorstehend zitierten «Ullmann»-Band.

Nach einer bevorzugten Ausführungsform des erfindungsgemässen Verfahrens lässt man die Suspension einen Rohrreaktor, der ein Verhältnis von Rohrlänge zu Rohrdurchmesser im Bereich von 3000 bis 7000, vorzugsweise 5000 aufweist, durchströmen.

Rührkolonnen bestehen aus einem zylindrischen Reaktor, der durch Zwischenwände in Kammern bevorzugt gleicher Grösse unterteilt ist. Dieser Reaktortyp wird daher in der Literatur gelegentlich auch als «Kammerreaktor» bezeichnet. Analog zu Destillationskolonnen werden bei Rührkolonnen die Zwischenwände auch «Böden» genannt. Gleichermassen analog ist auch die Stufenzahl definiert als Produkt von (praktischer) Bodenzahl und Stufenwirkungsgrad.

Die Rührer für die einzelnen Kammern sind gemeinsam auf einer Welle in der Rohrachse befestigt. Die Lager befinden sich an den Enden; nur bei besonders langen Rührerwellen ist eine Zwischenlagerung technisch sinnvoll. Die Auslegung der Rührer bezüglich Rührertyp, Rührergrösse, Leistungsbedarf, Strombrecher und dergleichen kann sehr unterschiedlich sein. Die Berechnung der mittleren Verweilzeit, Verweilzeitverteilung und Konzentration der Reaktanden in einer Rührkolonne ist identisch mit derjenigen für eine Rührkesselkaskade gleicher Stufenzahl; mit einer Rührkolonne lassen sich jedoch mit geringerem wirtschaftlichen Aufwand höhere Stufenzahlen realisieren. Die Flüssigkeit tritt in Rührkolonnen von Kammer zu Kammer durch Öffnungen in den Böden über. Rührkolonnen können mit beliebiger Orientierung im Raum, also stehend, waagerecht oder schräg liegend betrieben werden. Bevorzugt werden sie jedoch vertikal, geflutet von oben nach unten oder mit von unten nach oben steigender Flüssigkeit gefahren.

Einzelheiten und besondere Ausführungsformen sind Lehrbüchern der technischen Chemie zu entnehmen.

Nach einer weiteren bevorzugten Ausführungsform des erfindungsgemässen Verfahrens lässt man die Suspension eine Rührkolonne mit durch Zwischenböden abgeteilten Kammern durchströmen, wobei der Abstand der einzelnen Böden zueinander im Bereich des 0,35- bis 0,7fachen des inneren Durchmessers der Rührkolonne liegt.

Nach einer dritten bevorzugten Ausführungsform des erfindungsgemässen Verfahrens wird als Kristallisationsreaktor eine Kombination aus einem Rohrreaktor und einer Rührkolonne — jeweils wie vorstehend beschrieben — verwendet. Dementsprechend lässt man die Suspension in einen Rohrreaktor einströmen und anschliessend eine diesem nachgeschaltete Rührkolonne durchströmen.

Das erfindungsgemässe kontinuierlich hergestellte feinstteilige, gritarme zeolithische Natriumaluminiumsilikat wird nach Abschluss der Kristallisation aufgearbeitet. Hierzu wird der kristalline Feststoff abfiltriert, je nach den anwendungstechnischen Erfordernissen gewaschen und getrocknet und gewünschtenfalls in sonstiger gebräuchlicher Weise konfektioniert. Mutterlaugen und Waschwässer können in den Prozess zurückgeführt werden.

Aufgrund des hohen Kationenaustauschvermögens der gewonnenen zeolithischen Natriumaluminiumsilikate, das in einem Calciumbindevermögen im Bereich von 150 bis 200 mg CaO/g Aktivsubstanz zum Ausdruck kommt, können diese — insbesondere das Molekularsieb NaA — mit Vorteil als heterogene anorganische Builderstoffe (Phosphatersatz) in Wasch-, Spül- und Reinigungsmitteln Verwendung finden.

In den nachfolgenden Beispielen wird die Durchführung des erfindungsgemässen Verfahrens näher erläutert.

### Beispiele

Zur Durchführung der Beispiele 1a - 1d wurde ein Rohrreaktor mit einem Gesamtvolumen von circa 200 l und einem Rohrdurchmesser (innen) von 38 mm verwendet; durch 44 Umlenkungen in Abständen von etwa 4 Metern war der Reaktor kompakt gebaut und erforderte eine Grundfläche von nur 20 Quadratmetern. Der Rohrreaktor war vollständig von einem Heizmantel (Heisswasser) umgeben, der in insgesamt 10 Zonen für unterschiedliche Beheizung (in den Beispielen stets die jeweils angegebene Kristallisationstemperatur) unterteilt war.

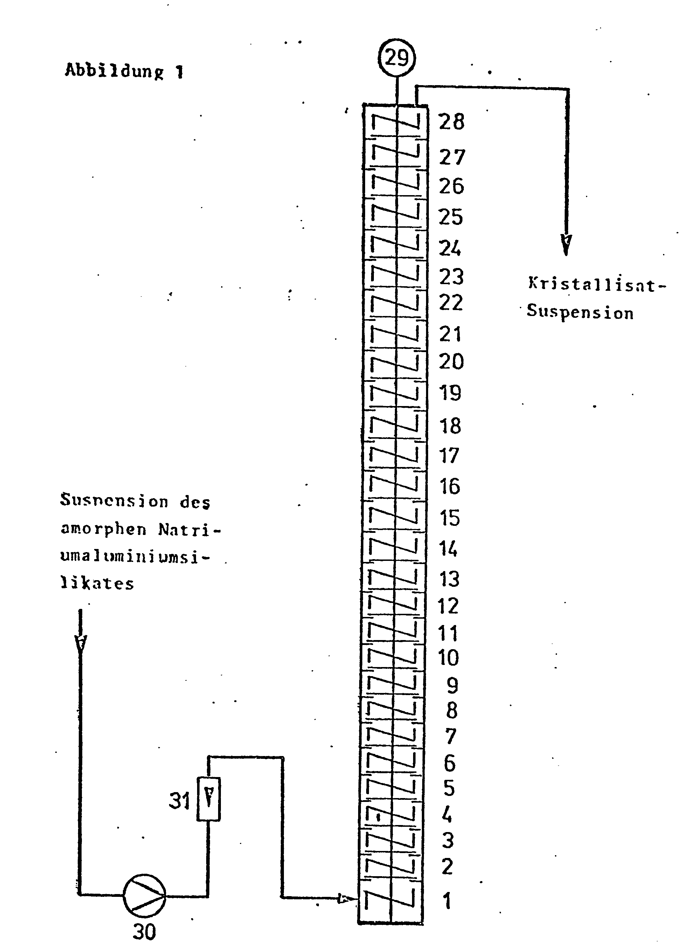

Für die Beispiele 2a - 2d wurde eine Rührkolonne mit einem nutzbaren Fassungsvermögen von etwa 200 l eingesetzt. Die Rührkolonne hatte eine Gesamtlänge von 3,70 m und wurde von unten nach oben betrieben. Durch 27 Zwischenböden wurden insgesamt 28 Kammern gebildet (s. Abbildung 1); die Kammern 2 bis 12 im Eingangsteil waren 11 cm hoch, die Kammern 13 bis 27 dagegen 14 cm (jeweils Innenhöhe). Die Kammern 1 und 28 (Reaktoreingang bzw. -ausgang) enthielten die Rührerlager und waren daher etwas grösser ausgelegt (circa 15 cm hoch). Die Zwischenböden wiesen konzentrische Öffnungen mit einem Durchmesser von 0,5 × Kolonneninnendurchmesser auf; die darüber im Abstand von circa 1 mm befindlichen Scheiben hatten jeweils einen Durchmesser von 0,7 × Kolonneninnendurchmesser (Kolonneninnendurchmesser 27 cm). Die Rührerwelle trug die Rührwerkzeuge für jede der Kammern (MIG-Rührer, Firma EKATO, Rührerdurchmesser = 0,7 × Kolonneninnendurchmesser). Die Rührerdrehzahl war am Rührmotor 29 stufenlos bis zu einer Rührerdrehzahl von 480 Umdrehungen pro Minute regelbar. Alle Kristallisationsbeispiele wurden bei einer konstanten Rührerdrehzahl von 312 Umdrehungen pro Minute ausgeführt. Die gesamte Kolonne wurde über einen Mantel mit Wasserdampf entsprechend der angegebenen Kristallisationstemperatur beheizt (3 Zonen). Der Durchsatz wurde mittels der Pumpe 30 sowie eines Schwebekörperdurchflussmessgerätes 31 reguliert.

Die in den folgenden Beispielen eingesetzten Suspensionen A bzw. B von röntgenamorphem Natriumaluminiumsilikat mit den Gesamtmolverhältnissen

A: 3,6 $Na_2O$ : 1 $Al_2O_3$ : 1,8 $SiO_2$ :  80 $H_2O$
B: 4,4 $Na_2O$ : 1 $Al_2O_3$ : 1,8 $SiO_2$ : 100 $H_2O$
wurden gemäss den Angaben der deutschen Patentanmeldung P 29 10 147.1, Beispiel 5f bzw. 5i, kontinuierlich mit 2492 bzw. 2664 kg pro Stunde hergestellt. Aus diesem Produktstrom wurden die für die folgenden Kristallisationsbeispiele benötigten Teilströme abgezweigt und direkt in den Rohrreaktor bzw. in die Rührkolonne geleitet. Die Aufheizung der Suspensionen von Fälltemperatur (65 ± 2°C) auf die angegebenen Kristallisationstemperaturen erfolgte durch kontinuierliches Einblasen von Wasserdampf unmittelbar vor dem Kristallisationsreaktor. Der Wassergehalt in der Suspension erhöhte sich dadurch um etwa 3 - 5 Mol $H_2O$ pro Mol $Al_2O_3$.

Zur Charakterisierung des Kristallisats wurden Produktproben alkalifrei gewaschen und über Nacht im Vakuumtrockenschrank bei 100°C getrocknet, gut verrieben und mittels ihres Röntgendiagramms identifiziert. Die Zusammensetzung bezüglich $Na_2O$ und $Al_2O_3$ wurde röntgenfluoreszenzanalytisch bestimmt. Als Wassergehalt ist der Glühverlust nach einer Stunde bei 800°C angegeben. Der Kristallhabitus wurde rasterelektronenmikroskopisch bestimmt, die Korngrössenverteilung mittels Coulter Counter[R] gemessen, der Nasssiebrückstand nach MOCKER (= Grit) unter Verwendung eines 25-$\mu$m-Siebes gemäss DIN 53 580 (1g Aktivsubstanz in 100 ml entionisiertem Wasser aufgeschlämmt, 1 Minute im Ultraschallbad homogenisiert, 5 Minuten Nasssiebung mit Wasserdruck von 4 bar und einer Strömungsgeschwindigkeit von 400 l Wasser pro Stunde; Rückwägung der getrockneten Siebe) ermittelt.

Das Calciumbindevermögen (= «CaBv») der getrockneten Produkte wurde entsprechend DE-OS 2 412 837 (Seite 27) bei 22 ± 2°C mit 1 g Aktivsubstanz pro Liter und 30°d (Deutsche Härte) Ausgangshärte nach 10 Minuten ermittelt und entsprechend als «mg CaO/g AS» (AS = Aktivsubstanz) angegeben.

Die Bedingungen für die Kristallisation der Ausgangssuspensionen zu feinstteiligem, gritarmem, zeolitischem Natriumaluminiumsilikat unter Verwendung der beschriebenen Kristallisationsreaktoren sowie die resultierenden Produkteigenschaften lassen sich aus der folgenden Tabelle entnehmen. Unter diesen Bedingungen bildet sich stets hochkristallines Natriumaluminiumsilikat des Typs NaA mit abgerundeten Kanten (Kristallitdurchmesser < 1,5 $\mu$m), ohne kristalline Verunreinigungen.

Erläuterungen zu der Tabelle:

(a) Suspension von amorphem Natriumaluminiumsilikat mit unterschiedlichen Gesamtmolverhältnissen entsprechend A und B wie vorstehend angegeben

(b) einschliesslich des zur Aufheizung auf Kristallisationstemperatur einkondensierten Wasserdampfes, in kg pro Stunde

(c) innerhalb des Kristallisationsreaktors auf ± 2°C konstant

(d) röntgenographisch durch Vergleich der stärksten Röntgenreflexe mit Standards ermittelt

(e) in Gewichtsprozent bezüglich Aktivstoff

(f) in $\mu$m

Bedingungen zur Kristallisation der Suspensionen A und B im Rohrreaktor (Beispiele 1a - 1d) bzw. in der Rührkolonne (Beispiele 2a - 2d) und resultierende Produkteigenschaften

| Beispiel Nr. | Kristallisationsbedingungen | | | Produkteigenschaften | | | |
| | Suspension (a) | Durchsatz (b) | Temperatur (c) | % NaA (d) | CaBv | Grit (e) | mittl. Teilchengrösse (f) |
|---|---|---|---|---|---|---|---|
| 1 a | A | 330 | 92 | 80 | 150 | 0,15 | 4,5 |
| b | | 280 | 88 | 85 | 155 | 0,10 | 5,2 |
| c | B | 310 | 94 | 90 | 160 | 0,08 | 4,2 |
| d | | 270 | 90 | 90 | 165 | 0,05 | 5,0 |
| 2 a | A | 400 | 93 | 85 | 150 | 0,11 | 5,0 |
| b | | 250 | 85 | 95 | 165 | 0,19 | 5,5 |
| c | B | 420 | 95 | 100 | 170 | 0,02 | 4,8 |
| d | | 350 | 88 | 100 | 175 | 0,14 | 5,4 |

## Patentansprüche

1. Verfahren zur kontinuierlichen Herstellung einer wässrigen alkalischen Suspension feinstteiliger, gritarmer, kristalliner zeolithischer Natriumaluminiumsilikate der Zusammensetzung 0,9 bis 1,1 $Na_2O$ : 1 $Al_2O_3$ : 1,8 bis 2,5 $SiO_2$ mit einem vom Trocknungsgrad abhängigen Wassergehalt, die zu mindestens 99,8 Gewichtsprozent eine Teilchengrösse von kleiner als 25 $\mu$m und ein hohes Kationenaustauschvermögen aufweisen, durch Kristallisation einer wässrigen alkalischen Suspension röntgenamorpher Natriumaluminiumsilikate, die eine Zusammensetzung entsprechend Molverhältnissen von 1,5 bis 5 $Na_2O$ : 1 $Al_2O_3$ : 1 bis 4 $SiO_2$ : 40 bis 400 $H_2O$ aufweist, bei erhöhten Temperaturen, dadurch gekennzeichnet, dass man die Suspension des röntgenamorphen Natriumaluminiumsilikats kontinuierlich in einen stufig wirkenden und/oder stufig ausgeführten Kristallisationsreaktor mit mindestens 20 Stufen einströmen lässt, wobei die Suspension im Eingangsteil des Reaktors, der bis zu einem Drittel des gesamten Reaktorvolumens umfassen kann, mindestens 8 Stufen durchströmt und eine Rückvermischung von bereits kristallisiertem Produkt mit amorphem Produkt — insbesondere im ersten Drittel der Kristallisationsstrecke — weitgehend zurückgedrängt wird, die Suspension bei einer Temperatur von 80 bis 100°C so lange im Reaktor hält, bis der röntgenographisch ermittelte Kristallisationsgrad des zeolithischen Natriumaluminiumsilikats mindestens 80% der theoretisch erzielbaren Kristallinität erreicht hat, und anschliessend die Suspension kontinuierlich am dem Eingangsteil entgegengesetzten Ende des Reaktors ausströmen lässt.

2. Verfahren nach Anspruch 1, dadurch gekennzeichnet, dass man die Suspension mit einem Durchsatz im Bereich von 1 bis 4 Kubikmeter Suspension pro Kubikmeter Reaktorvolumen und Stunde in den Reaktor einströmen lässt.

3. Verfahren nach Anspruch 1 und 2, dadurch gekennzeichnet, dass man die Suspension entweder vor Einleiten in den Kristallisationsreaktor oder in der Eingangsstufe des Reaktors durch Einblasen von Wasserdampf auf die gewünschte Kristallisationstemperatur erhitzt.

4. Verfahren nach Anspruch 1 bis 3, dadurch gekennzeichnet, dass man die Suspension bei einer bis auf Abweichungen von ± 2°C konstanten Temperatur, vorzugsweise im Bereich von 85 bis 95°C, kristallisiert.

5. Verfahren nach Anspruch 1 bis 4, dadurch gekennzeichnet, dass man die Suspension in einen Rohrreaktor, der ein Verhältnis von Rohrlänge zu Rohrdurchmesser im Bereich von 3000 bis 7000, vorzugsweise von 5000, aufweist, einströmen lässt.

6. Verfahren nach Anspruch 1 bis 4, dadurch gekennzeichnet, dass man die Suspension in eine Rührkolonne mit durch Zwischenböden abgeteilten Kammern einströmen lässt, wobei der Abstand der einzelnen Böden zueinander im Bereich des 0,35- bis 0,7fachen des inneren Durchmessers der Rührkolonne liegt.

7. Verfahren nach Anspruch 1 bis 6, dadurch gekennzeichnet, dass man die Suspension in einen Rohrreaktor einströmen und anschliessend eine diesem nachgeschaltete Rührkolonne durchströmen lässt.

## Claims

1. A process for the continuous production of an aqueous alkaline suspension of finely particulate, low-grit, crystalline zeolitic sodium aluminium silicates having the following composition
$0.9\text{-}1.1\ Na_2O : 1\ Al_2O_3 : 1.8\text{-}2.5\ SiO_2$
and a water content dependent on the degree of drying, of which at least 99.8% by weight have a particle size of smaller than 25 $\mu$m and a high cation-exchange capacity, by crystallizing an aqueous alkaline suspension of X-ray amorphous sodium aluminium silicates which has a composition corresponding to molar ratios of
$1.5\text{-}5\ Na_2O : 1\ Al_2O_3 : 1\text{-}4\ SiO_2 : 40\text{-}400\ H_2O$
at elevated temperatures, characterized in that the suspension of the X-ray amorphous sodium aluminium silicate is allowed to flow continuously into an at least 20-stage crystallization reactor functioning and/or constructed in stages, the suspension flowing through at least 8 stages in the entrance zone of the reactor, which may comprise up to one third of the total reactor volume, and remixing of already crystallized product with amorphous product — particularly in the first third of the crystallization zone — largely being suppressed, the suspension is kept at a temperature of from 80 to 100°C in the reactor until the X-ray-photographically determined degree of crystallization of the zeolitic sodium aluminium silicate has reached at least 80% of the theoretically attainable crystallinity, after which the suspension is allowed to flow continuously out of the reactor at that end opposite the entrance zone.

2. A process as claimed in claim 1, characterized in that the suspension is allowed to flow into the reactor at a rate of from 1 to 4 m³ of suspension per m³ reactor volume per hour.

3. A process as claimed in claims 1 and 2, characterized in that the suspension is heated to the required crystallization temperature by blowing in steam either before introduction into the crystallization reactor or at the entrance stage of the reactor.

4. A process as claimed in claims 1 to 3, characterized in that the suspension is crystallized at a temperature which is constant to ± 2°C, preferably in the range from 85 to 95°C.

5. A process as claimed in claims 1 to 4, characterized in that the suspension is allowed to flow into a tube reactor of which the length-to-diameter ratio is between 3000 and 7000 and preferably amounts to 5000.

6. A process as claimed in claims 1 to 4, characterized in that the suspension is allowed to flow into a stirrer-equipped column with compartments separated by intermediate plates, the interval between the individual plates amounting to between 0.35 and 0.7 times the internal diameter of the stirrer-equipped column.

7. A process as claimed in claims 1 to 6, characterized in that the suspension is allowed to flow into a tube reactor and then though a following stirrer-equipped column.

## Revendications

1. Procédé pour la fabrication continue d'une suspension alcaline aqueuse de silicates zéolithiques de sodium et d'aluminium cristallins en très fines particules, pauvres en particules abrasives, de composition
$0,9\ \text{à}\ 1,1\ Na_2O : 1\ Al_2O_3 : 1,8\ \text{à}\ 2,5\ SiO_2$
d'une teneur en eau dépendant du degré de séchage, qui présentent à au moins 99,8% en poids, une dimension de particules inférieure à 25 $\mu$m et ont un pouvoir élevé d'échange de cations, par cristallisation à températures élevées d'une suspension alcaline aqueuse de silicates de sodium et d'aluminium amorphes aux rayons X, qui présente une composition correspondant à des proportions molaires de
$1,5\ \text{à}\ 5\ Na_2O : 1\ Al_2O_3 : 1\ \text{à}\ 4\ SiO_2 : 40\ \text{à}\ 400\ H_2O,$
caractérisé en ce que l'on fait circuler en continu la suspension du silicate de sodium et d'aluminium amorphe aux rayons X dans un réacteur de cristallisation à action étagée et/ou de construction étagée ayant au moins 20 étages, la suspension traversant au moins 8 étages dans la partie d'entrée du réacteur qui peut comporter jusqu'à un tiers du volume total du réacteur et on évite totalement un mélangeage du produit déjà cristallisé avec le produit amorphe — en particulier dans le premier tiers du trajet de cristallisation — on maintient la suspension dans le réacteur à une température de 80 à 100°C, jusqu'à ce que le degré de cristallisation du silicate zéolithique de sodium et d'aluminium, déterminé par les rayons X, ait atteint au moins 80% de la cristallinité théoriquement possible, et ensuite on fait s'écouler la suspension en continu à l'extrémité du réacteur opposée à la partie d'entrée.

2. Procédé selon la revendication 1, caractérisé en ce que l'on fait circuler la suspension dans le réacteur avec un débit dans l'intervalle de 1 à 4 m³ de suspension par m³ du volume de réacteur et par heure.

3. Procédé selon les revendications 1 et 2, caractérisé en ce que l'on chauffe la suspension à la température de cristallisation désirée par injection de vapeur d'eau, soit avant l'entrée dans le réacteur de cristallisation, soit dans l'étage d'entrée du réacteur.

4. Procédé selon les revendications 1 à 3, caractérisé en ce que l'on cristallise la suspension à une température constante jusqu'à des écarts de ± 2°C, de préférence dans l'intervalle de 85 à 95°C.

5. Procédé selon les revendications 1 à 4, caractérisé en ce que l'on fait circuler la suspension dans un réacteur tubulaire qui présente un rapport de la longueur du tube au diamètre du tube dans l'intervalle de 3000 à 7000, de préférence de 5000.

6. Procédé selon les revendications 1 à 4, caractérisé en ce que l'on fait circuler la suspension dans une colonne à agitation ayant des chambres séparées par des plateaux intermédiaires, la distance des plateaux individuels entre eux étant dans l'intervalle de 0,35 à 0,7 fois de diamètre intérieur de la colonne à agitation.

7. Procédé selon les revendications 1 à 6, caractérisé en ce que l'on fait circuler la suspension dans un réacteur tubulaire et ensuite dans une colonne à agitation branchée à la suite de celui-ci.

**Abbildung 1**

Kristallisat-
Suspension

Suspension des
amorphen Natriumaluminiumsilikates